# EUROPÄISCHE PATENTSCHRIFT

(11) **EP 2 719 566 B1**
(45) Veröffentlichungstag und Bekanntmachung des Hinweises auf die Patenterteilung: **03.12.2014**
(21) Anmeldenummer: 13176134.8
(22) Anmeldetag: 11.07.2013
(51) Int. Cl.: B60K 15/035, B60K 15/04, F01N 3/20, B60K 15/03

(54) **Befüllkopf für einen Flüssigkeitstank**
Filling head for a liquid tank
Tête de remplissage pour un réservoir de liquide

(30) Priorität: 09.10.2012 DE 102012109562
(43) Veröffentlichungstag der Anmeldung: 16.04.2014
(73) Patentinhaber: VERITAS AG, 63571 Gelnhausen (DE)
(72) Erfinder: Netzer, Heribert, 63457 Hanau (DE); Schindler, Thomas, 63768 Hösbach (DE)
(74) Vertreter: Klinski, Robert

(56) Entgegenhaltungen:
- US-A1- 2007 210 607
- US-A1- 2011 284 128

## Beschreibung

Die vorliegende Erfindung betrifft einen Befüllkopf für einen Flüssigkeitstank in einem Kraftfahrzeug.

Die Druckschrift WO 90/014244 beschreibt eine Kombinationsdichtung mit einem Rückschlagventil in einem Einfüllstutzen eines Kraftstofftanks, um das Entweichen von Dampf aus dem Tank zu minimieren, wenn der Tankdeckel entfernt wird. Die Kombinationsdichtung umfasst einen ringförmigen Körper aus elastomerem Material, der eine innere ringförmige Lippe zum Abdichten um die äußere Oberfläche einer Brennstoffdüse und einen integrierten Rückschlagventilabschnitt an dessen axial inneren Ende aufweist. Die Kombinationsdichtung ist im Querschnitt senkrecht zur Einfüllrichtung angeordnet.

Die Druckschrift US 2011/284128 A1 betrifft ein Einwegeventil für einen Kraftstofftankfüllstutzen. Der Kraftstofftankfüllstutzen umfasst drehbar gelagerte Blockierelemente, die diagonal in dem Kraftstofftankfüllstutzen angeordnet sind.

Die gattungsbildende Druckschrift US 2007/210607 A1 betrifft eine Füllkopfanordnung für Kraftfahrzeuge.

Bei dieser senkrechten Anordnung entstehen beim Einführen der Befülldüse in den Einfüllstutzen ein hoher Widerstand und eine hohe Belastung für die Kombinationsdichtung. Dadurch kann die Kombinationsdichtung beschädigt werden. Daneben ist die Kombinationsdichtung im oberen Teil des Einfüllstutzens angeordnet. Kommt es zu einem Rückschwappen (Spit-Back) besteht die Gefahr, dass Flüssigkeit aus dem Einfüllstutzen austritt. Wird hingegen eine senkrecht zur Befüllrichtung stehende Dichtung weiter Innen im Einfüllstutzen am unteren Ende einer Befülldüse angeordnet, so kann möglicherweise eine Öffnung in der Befülldüse verschlossen werden, die zum Auslösen eines Rückschlagventils dient.

Es ist die der Erfindung zugrundeliegende Aufgabe, einen Befüllkopf mit verbesserter Dichtung anzugeben.

Diese Aufgabe wird durch einen Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Befüllkopf für einen Flüssigkeitstank in einem Kraftfahrzeug gelöst, mit einem Einfüllstutzen zum Einführen einer Befülldüse und einem diagonal um eine Längsachse des Einfüllstutzens umlaufenden Dichtungselement zum Abdichten des Einfüllstutzens, das durch eine elastische Ringscheibe mit einer Einführöffnung zum Einführen der Befülldüse gebildet wird. Der Flüssigkeitstank kann ein Tank für eine wässrige Harnstofflösung sein (SCR-Tank).

Dadurch wird beispielsweise der technische Vorteil erreicht, dass ein Einführen der Befülldüse erleichtert wird und auf das Dichtungselement ausgeübte Kräfte verringert werden. Die Dichtung kann im Einfüllstutzen tieferliegend angeordnet werden, ohne dass eine Öffnung zum Auslösen eines Rückschlagventils am unteren Ende der Befülldüse verdeckt wird. Dadurch wird beispielsweise der technische Vorteil erreicht, dass sich das Dichtungselement vollumfänglich an die Befülldüse anlegt und die Dichtwirkung verbessert wird.

In einer weiteren vorteilhaften Ausführungsform weist die Einführöffnung eine ovale Form auf. Dadurch wird beispielsweise der technische Vorteil erreicht, dass sich das diagonal angeordnete Dichtungselement gleichmäßig um eine im Querschnitt kreisförmige Befülldüse legt.

In einer weiteren vorteilhaften Ausführungsform weist die Ringscheibe einen Verstärkungsabschnitt zum Verstärken des Dichtungselementes um die Einführöffnung herum auf. Dadurch wird beispielsweise der technische Vorteil erreicht, dass eine Beschädigung des Dichtungselements durch die Befülldüse verhindert wird.

In einer weiteren vorteilhaften Ausführungsform ist der Verstärkungsabschnitt durch einen Ringscheibenbereich mit einer größeren Dicke gebildet. Dadurch wird beispielsweise der technische Vorteil erreicht, dass sich der Verstärkungsabschnitt auf besonders einfache Weise realisieren lässt.

In einer weiteren vorteilhaften Ausführungsform ist der Verstärkungsabschnitt durch eine ringförmige Wulst gebildet. Dadurch wird beispielsweise der technische Vorteil erreicht, dass sich der Verstärkungsabschnitt zusätzlich die Dichtwirkung des Dichtungselementes verbessert.

In einer weiteren vorteilhaften Ausführungsform ist ein innerer Dichtungsrand des Dichtungselementes abgerundet. Dadurch wird beispielsweise der technische Vorteil erreicht, dass ein Einführen einer Befülldüse und ein Gleiten des Dichtungselementes auf der Befülldüse verbessert werden.

In einer weiteren vorteilhaften Ausführungsform umfasst das Dichtungselement einen umlaufenden erhöhten Randabschnitt zum Fixieren des Dichtungselementes in einer umlaufenden Aussparung, die in dem Einfüllstutzen umläuft. Dadurch wird beispielsweise der technische Vorteil erreicht, dass eine Befestigung des Dichtungselementes verbessert wird.

In einer weiteren vorteilhaften Ausführungsform umfasst das Dichtungselement einen Positionierungsabschnitt zum Positionieren des Dichtungselementes in dem Einfüllstutzen. Dadurch wird beispielsweise der technische Vorteil erreicht, dass beim Einsetzen des Dichtungselements eine korrekte Position anhand des Positionierungsabschnittes sichergestellt werden kann.

In einer weiteren vorteilhaften Ausführungsform umfasst der Einfüllstutzen eine Aussparung zum Einsetzen des Dichtungselementes. Dadurch wird beispielsweise ebenfalls der technische Vorteil erreicht, dass eine Befestigung des Dichtungselementes verbessert wird.

In einer weiteren vorteilhaften Ausführungsform umfasst der Einfüllstutzen ein erstes Formteil und ein zweites Formteil, zwischen denen das Dichtungselement eingesetzt ist. Dadurch wird beispielsweise der technische Vorteil erreicht, dass sich das Dichtungselement auf einfache Weise in den Einfüllstutzen einsetzen lässt.

In einer weiteren vorteilhaften Ausführungsform umfasst das erste Formteil ein Rastmittel zum Einrasten in dem zweiten Formteil oder das zweite Formteil ein Rastmittel zum Einrasten in dem ersten Formteil, um das Dichtungselement zwischen dem ersten Formteil und dem zweiten Formteil einzuklemmen. Dadurch wird beispielsweise der technische Vorteil erreicht, dass eine schnelle Montage des Dichtungselementes durchgeführt werden kann.

In einer weiteren vorteilhaften Ausführungsform umfasst das erste Formteil oder das zweite Formteil eine diagonal umlaufende Auflagefläche für das Dichtungselement. Dadurch wird beispielsweise der technische Vorteil erreicht, dass sich die Dichtwirkung des Dichtungselementes verbessert.

In einer weiteren vorteilhaften Ausführungsform ist der Einfüllstutzen ein Kunststoffformteil. Dadurch wird beispielsweise der technische Vorteil erreicht, dass sich der Einfüllstutzen auf einfache Weise herstellen lässt.

In einer weiteren vorteilhaften Ausführungsform ist das Dichtungselement aus Silikon oder Gummi gebildet. Dadurch wird beispielsweise der technische Vorteil erreicht, dass besonders geeignete Materialien für das Dichtungselement verwendet werden.

Ausführungsbeispiele der Erfindung sind in den Zeichnungen dargestellt und werden im Folgenden näher beschrieben.

Es zeigen:
- Fig. 1: eine perspektivische Ansicht eines Befüllkopfes;
- Fig. 2: eine Explosionsdarstellung des Befüllkopfes;
- Fig. 3: eine Querschnittsansicht des Befüllkopfes;
- Fig. 4: eine perspektivische Ansicht eines Tauchrohrformkörpers:
- Fig. 5: eine Querschnittsansicht des Tauchrohrformkörpers mit getrennten Formkörperteilen;
- Fig. 6: eine Querschnittsansicht des Tauchrohrformkörpers mit zusammengesetzten Formkörperteilen;
- Fig. 7: eine weitere Querschnittsansicht des Tauchrohrformkörpers mit zusammengesetzten Formkörperteilen; und
- Fig. 8: mehrere Ansichten eines Dichtungselementes.

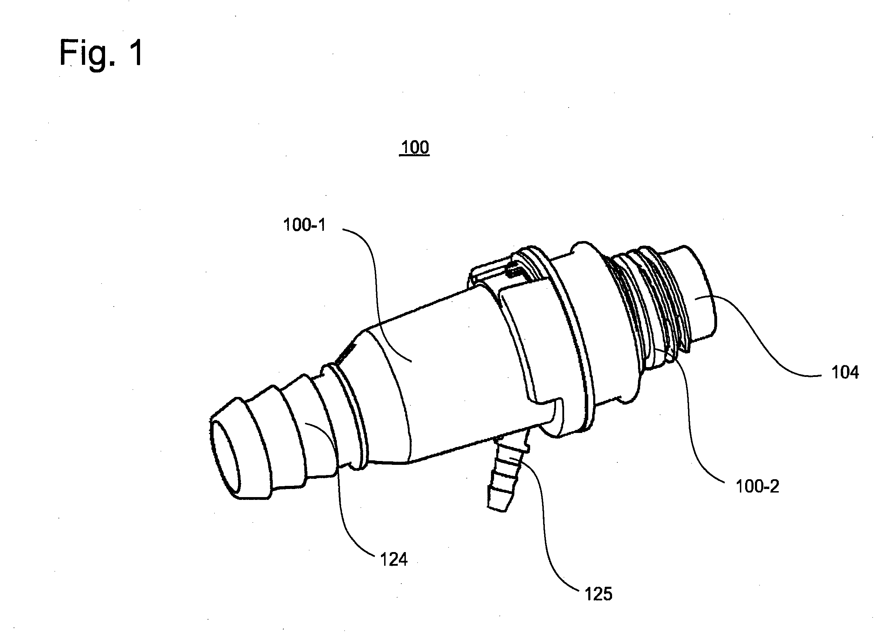

Fig. 1 zeigt eine perspektivische Ansicht eines Befüllkopfes 100, beispielsweise zur Betankung eines Flüssigkeitstanks mit einer wässrigen Harnstofflösung (SCR-Betankung). Eine wässrige Harnstofflösung wird in Kraftfahrzeugen zur Nachbehandlung von Abgasen in einem SCR-Katalysator benutzt wird. Dabei wird durch selektive katalytische Reduktion (Selective Catalytic Reduction - SCR) der Ausstoß von Stickoxiden um etwa 90 % reduziert.

Bei der SCR-Betankung wird die wässrige Harnstofflösung mit unterschiedlich ausgebildeten Zapfpistolen mit einer Füllgeschwindigkeit von bis zu 40l/min in den Flüssigkeitstank gefüllt. Dabei sollte verhindert werden, dass die wässrige Harnstofflösung aus dem Befüllkopf 100 austritt und ein sogenannter Spit-Back entsteht. Daneben sollte auch bei mehrmaligem Nachtanken mit einer Zapfpistole als Befülldüse ein Flüssigkeitsaustritt vermieden werden. Zusätzlich sollte die SCR-Betankung mit einer auf den Befüllkopf aufgeschraubten Kruse-Flasche oder einem Adapter für einen Kanister möglich sein.

Der Befüllkopf 100 ist aus einem ersten Befüllkopfteil 100-1 und einem zweiten Befüllkopfteil 100-2 gebildet. Das erste Befüllkopfteil 100-1 und das zweite Befüllkopfteil 100-2 sind flüssigkeits- und druckdicht miteinander verbunden und bilden im Inneren einen Hohlraum, in dem ein Tauchrohrformkörper eingesetzt ist. Der Tauchrohrformkörper bildet im Inneren des Befüllkopfes 100 einen weiteren Teil eines Einfüllstutzens 104. Der Tauchrohrformkörper nimmt eine Zapfpistole als Befülldüse auf und positioniert diese in dem Befüllkopf 100. Zusätzlich begrenzt der Tauchrohrformkörper den Strahl der aus der Befülldüse austretenden Flüssigkeit.

Daneben umfasst der Befüllkopf 100 einen großen Anschlussstutzen 124 zum Anschließen oder Aufstecken eines Einfüllrohres oder Schlauches, der in einen Flüssigkeitstank führt und einen kleinen Anschlussstutzen 125 zum Anschließen einer Belüftungsleitung, die zum Luftaustausch oder Belüftung bei einer Flaschenbetankung dient, falls eine Flasche (Kruse-Flasche) druckdicht auf einem Gewinde des Befüllkopfes 100 verschraubt wird. Fig. 1 zeigt den Befüllkopf 100 von außen ohne Halteblech und ohne die an den Anschlussstutzen 124 und 125 aufgesteckten Schläuche. Der Befüllkopf 100 kann zur Befestigung an einer Karosserie zusätzlich mit einem Halteblech ausgerüstet sein.

Die Befüllkopfteile 100-1 und 100-2 und die Innenteile des Befüllkopfes 100 können beispielsweise aus thermoplastischen Elastomeren (TPE) oder Elastomerlegierungen, insbesondere aus thermoplastischen Polyolefinen wie TPE-O (unvernetzte thermoplastische Polymere), oder Blockcopolymeren wie beispielsweise Polyestern (TPE-E), Polyamidelastomeren (TPE-A) gebildet sein. Besonders vorteilhaft ist die Herstellung aus Polyoxymethylen (POM) oder Polyamiden und deren Derivate, da sich hierdurch eine besondere Widerstandsfähigkeit des Befüllkopfes realisieren lässt. Vorteilhaft ist es, die Einzelteile des Befüllkopfes 100 auf technisch einfache Weise im Spritzgussverfahren herzustellen. Alle Teile des Befüllkopfes 100 können ein Material umfassen, das eine Kristallbildung von Harnstoffkristallen an deren Oberfläche verhindert.

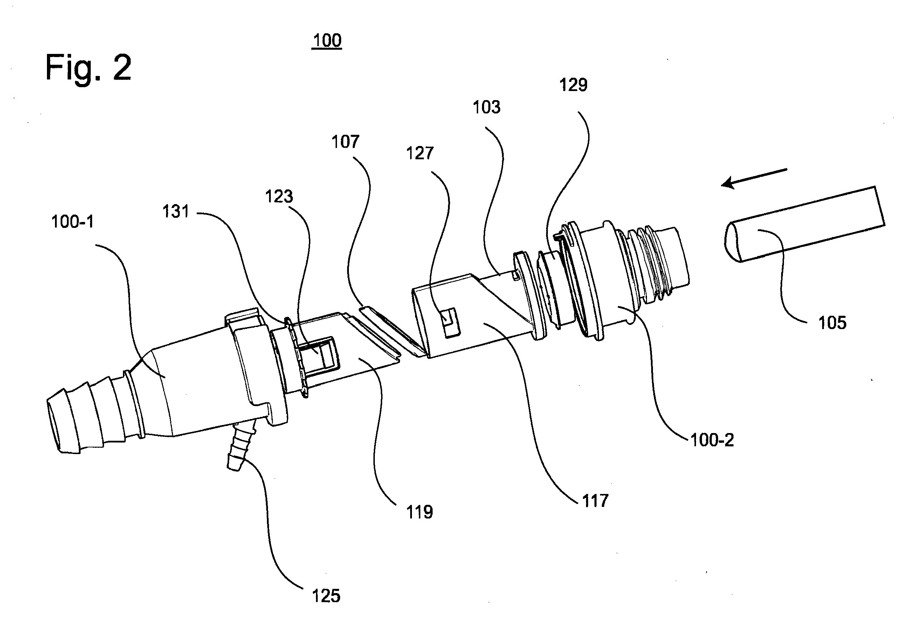

Fig. 2 zeigt eine Explosionsdarstellung des Befüllkopfes 100 und seiner Einzelteile. Der Befüllkopf 100 umfasst einen Tauchrohrformkörper 103 mit einem ersten Formteil 117 und einem zweiten Formteil 119. Zwischen dem ersten Formteil 117 und dem zweiten Formteil 119 ist ein Dichtungselement 107 angeordnet, das die Verbindungsstelle zwischen dem ersten Formteil 117 und dem zweiten Formteil 119 abdichtet. Das erste Formteil 117, das zweite Formteil 119 und das Dichtungselement 107 bilden den Tauchrohrformkörper 103.

Das erste Formteil 117 bildet einen Teil eines Einfüllstutzens 104 im Inneren des Befüllkopfes 100. Das zweite Formteil 119 bildet einen über die eingesetzte Befülldüse 105 hinausragenden Teil zum Formen und Zentrieren eines von der Befülldüse 105 beim Betanken ausgehenden Flüssigkeitsstrahles.

Durch das Formen des Flüssigkeitsstrahles mittels des zweiten Formteils 117 wird eine Betankung mit einer hohen Durchflussgeschwindigkeit sichergestellt und ein Ansammeln der Flüssigkeit im Inneren des Befüllkopfes 100 verhindert. Besonders vorteilhaft ist es, wenn das zweite Formteil 119 zylinder- oder rohrförmig mit parallelen Wänden ist, da hierdurch eine laminare Flüssigkeitsströmung erzeugt werden kann.

Das erste Formteil 117 dient daneben zum Fixieren eines Ringmagneten 129 im Inneren des Befüllkopfes 100. Der Ringmagnet 129 ist zwischen dem ersten Formteil 117 und dem ersten Befüllkopfteil 100-1 in einem Hohlraum eingesetzt. Der Ringmagnet 129 erzeugt ein dauerhaftes magnetisches Feld, das von einer Befülldüse 105 erfasst werden kann, um die korrekte Position der Befülldüse 105 im Inneren des Befüllkopfes 100 zu bestimmen. Weiter umfasst das erste Formteil 117 zwei seitliche Rastöffnungen 127 zum Eingreifen eines Rasthakens 123.

Das zweite Formteil 119 umfasst zwei Rasthaken 123 zum Eingreifen in die Rastöffnungen 127 des ersten Formteils 117. Beim Zusammenstecken des ersten Formteils 117 und des zweiten Formteils 119 rasten die Rasthaken 123 in der Rastöffnung 127 ein und es entsteht eine feste Verbindung, die auf einfache Weise hergestellt werden kann. Im Allgemeinen können jedoch auch andere Rastmittel vorgesehen sein, solange durch die eine mechanische Verbindung des ersten Formteils 117 und des zweiten Formteils 119 bewirkt wird.

An dem unteren Ende des zweiten Formteils 119 ist eine kreisförmige Schwallwand 131 angeordnet, die die Flüssigkeitsströmung in ein Flüssigkeitsreservoir zwischen dem Tauchrohrformkörper 103 und einer Gehäusewand des Befüllkopfes 100 hemmt. Die zurückströmende Flüssigkeit wird durch die Schwallwand 131 abgebremst und es wird verhindert, dass der Befüllkopf 100 vollständig beflutet wird. Nichtsdestotrotz sollte beim Nachtanken das Flüssigkeitsreservoir mit einer ausreichenden Flüssigkeitsrestmenge befüllt werden können.

Das Dichtungselement 107 ragt in die Innenseite des Tauchrohrformkörpers 103 hinein und dichtet die Befülldüse 105 gegenüber dem Tauchrohrformkörper 105 ab, indem sich das Dichtungselement 107 seitlich umlaufend um die Befülldüse 105 legt. Dadurch wird verhindert, dass Flüssigkeit zwischen der Befülldüse 105 und dem Tauchrohrformkörper 103 zurückspritzen kann. Das Dichtungselement 107 läuft in der Längsachse des Befüllkopfes 100 diagonal um die Befülldüse 105 um. Durch diese Anordnung lässt sich der technische Vorteil erreichen, dass die Dichtwirkung des Befüllkopfes 100 erhöht wird, die Befülldüse 105 möglichst weit im Inneren des Befüllkopfes 100 abgedichtet wird und eine Öffnung für eine Zapfventilautomatik am unteren Ende der Befülldüse 105 unverdeckt bleibt. Die Zapfventilautomatik sorgt dafür, dass der Tankvorgang bei vollem Flüssigkeitstank automatisch beendet wird.

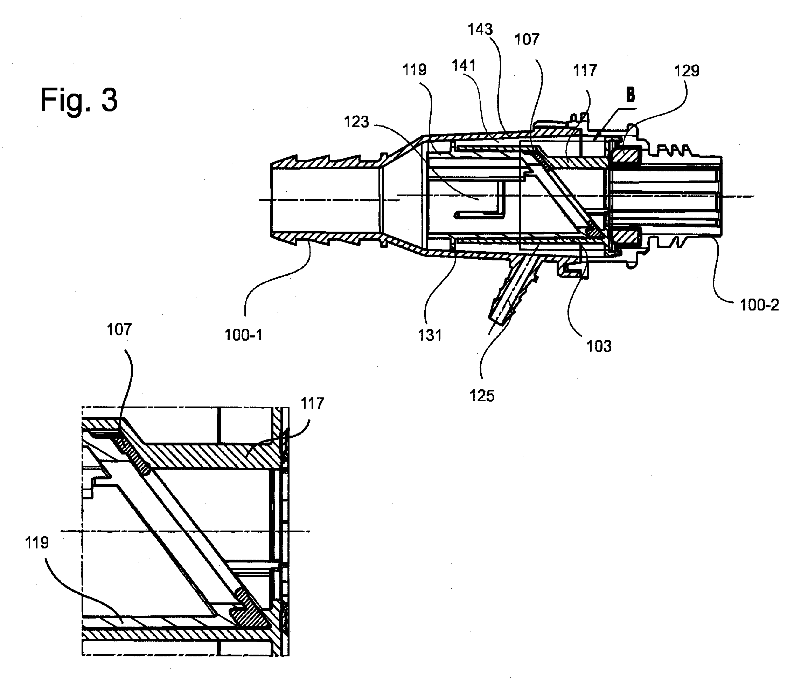

Fig. 3 zeigt eine Querschnittsansicht des Befüllkopfes 100. Der Befüllkopf 100 umfasst zwischen der Gehäusewand 143 und dem Tauchrohrformkörper 103 das Flüssigkeitsreservoir 141. Das Flüssigkeitsreservoir 141 bildet einen zylinderförmigen Hohlraum, in dem eine aus dem Tank zurückschwappende Flüssigkeitsmenge oder eine beim Nachtanken aus der Befülldüse 105 ausströmende Flüssigkeitsmenge aufgenommen werden kann. Dadurch wird ein Austreten der Flüssigkeit aus dem Befüllkopf 100 vermieden.

Die Schwallwand 131 ist am unteren Ende des Tauchrohrformkörpers 103 am Eingang des Flüssigkeitsreservoirs 141 angeordnet. Flüssigkeit, die in oder aus dem Flüssigkeitsreservoir 141 fließt, passiert die Schwallwand 131. Dadurch kann ein Fluss in das Flüssigkeitsreservoir 141 gehemmt werden, so dass ein Austritt von Flüssigkeit aus dem Befüllkopf 100 verhindert wird. In der Schwallwand 131 sind zu diesem Zweck Durchtrittsöffnungen 145 gebildet, die den Fluss in das Flüssigkeitsreservoir 141 bestimmen. Die Größe, Anzahl und Lage der Durchtrittsöffnungen 145 ist auf die Größe dieses Flusses abgestimmt.

Vorteilhaft ist es, wenn das Flüssigkeitsreservoir 141 ein Volumen von 160 ml bis 200 ml aufweist, da in diesem Fall auch bei einem dreimaligen Nachtanken mit einer Zapfventilautomatik ein Austreten von Flüssigkeit aus dem Befüllkopf 100 vermieden werden kann.

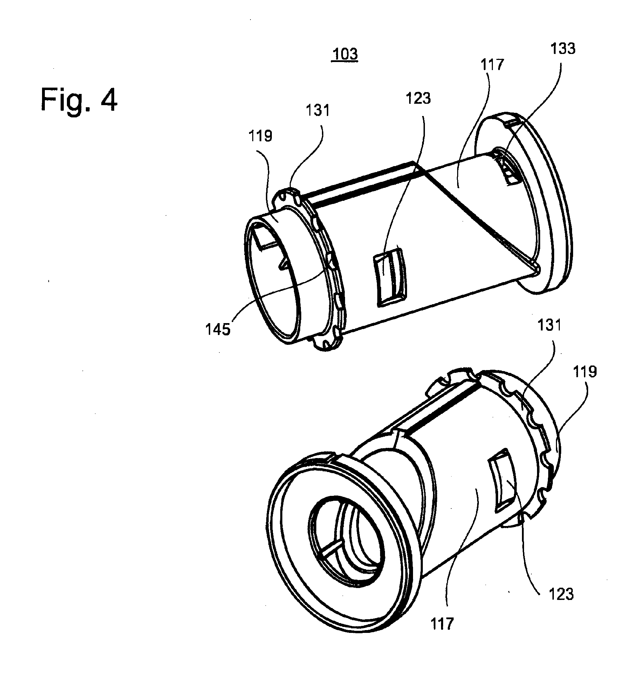

Fig. 4 zeigt eine perspektivische Ansicht eines Tauchrohrformkörpers 103. Am oberen Ende des ersten Formteils 117 befindet sich eine Öffnung 133 aus der Luft aus dem Flüssigkeitsreservoir 141 austreten kann, so dass die Bildung eines Luftpolsters im Flüssigkeitsreservoir 141 verhindert wird. Ein Druckpolster könnte verhindern, dass das Flüssigkeitsreservoir 141 beflutet werden kann, beispielsweise bei einem Nachtankvorgang, so dass Flüssigkeit aus dem Befüllkopf 100 austreten könnte. Die Größe und die Lage der Öffnung 133 sind auf die Funktion des Befüllkopfes 100 und das Flüssigkeitsreservoir 141 abgestimmt.

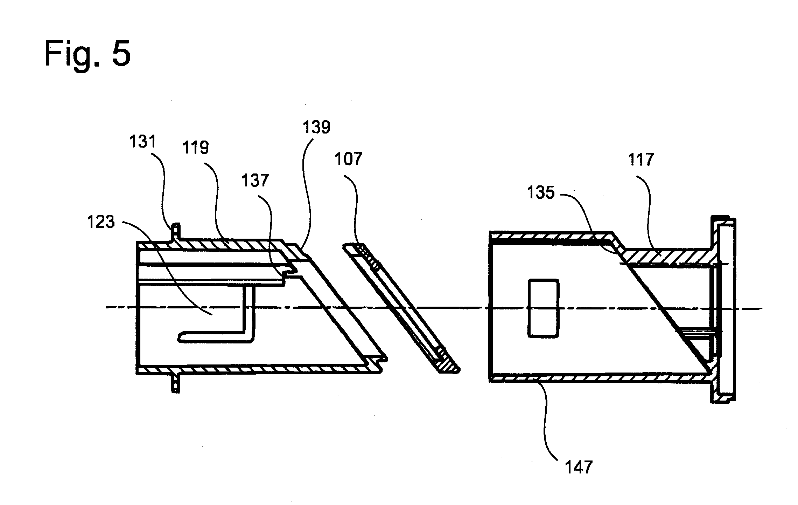

Fig. 5 zeigt eine Querschnittsansicht des Tauchrohrformkörpers 103 mit getrennten Formkörperteilen 117 und 119. Das erste Formteil 117 weist eine diagonal um die Längsachse des Befüllkopfes umlaufende Auflagefläche 135 für das Dichtungselement 107 auf. An der Auflagefläche 135 liegt das Dichtungselement 107 an. In entsprechender Weise umfasst das zweite Formteil 119 eine weitere Auflagefläche 139, an der eine entgegengesetzte Seite der Dichtungselements 107 anliegt. Das Dichtungselement 107 wird beim Zusammensetzen des Tauchrohrformkörpers 103 zwischen den Auflageflächen 135 und 139 eingeklemmt und von diesen gehalten. Dadurch wird der Vorteil erreicht, dass sich die Dichtwirkung des Dichtungselementes 107 innerhalb des Tauchrohrformkörpers 103 verbessert.

Daneben umfasst der Tauchrohrformkörper 103 einen Anschlagsabschnitt 137 zum Bilden eines Anschlags für die Befülldüse 105. Der Anschlagsabschnitt 137 ist auf der Innenseite des zweiten Formteils 119 gebildet, so dass die Befülldüse 105 beim Einführen in den Einfüllstutzen 104 mit ihrem vorderen Ende an den Anschlagsabschnitt 137 stößt. Der Anschlagsabschnitt 137 ist beispielsweise durch einen im Inneren des zweiten Formteils 119 hervorstehenden Wandabschnitt gebildet, der sich entlang der Befüllrichtung erstreckt. Auf diese Weise kann eine Verwirbelung der Flüssigkeit auch bei hohen Füllgeschwindigkeiten verhindert werden. Das erste Formteil 117 umfasst eine umlaufende Wandung 147, die einen zylindrischen Aufnahmeraum zur Aufnahme des zweiten Formteils 119 umfasst.

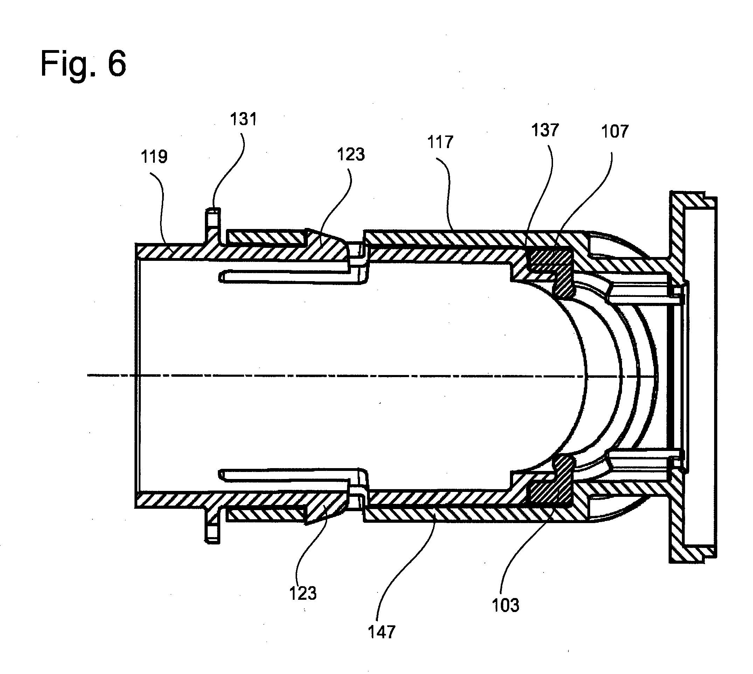

Fig. 6 zeigt eine Querschnittsansicht des Tauchrohrformkörpers 103 mit zusammengesetzten Formkörperteilen 117 und 119 und dem Dichtungselement 107. Das erste Formteil 117 ist derart ausgestaltet, dass eine Wandung 147 das zweite Formteil 119 seitlich umgreift. Das zweite Formteil 119 ist in dem ersten Formteil 117 aufgenommen. Dadurch erhöht sich die Dichtwirkung zwischen den beiden Formteilen 117 und 119 zusätzlich. Die Rasthaken 123 sind in den Rastöffnungen 127 eingehakt.

Das zweite Formteil 119 weist in der Auflagefläche eine umlaufende Aussparung 137 zum formschlüssigen Einsetzen eines vorspringenden Abschnittes des Dichtungselementes 107 in dem Tauchrohrformkörper 103 auf. Dadurch wird nicht nur die Dichtwirkung des Dichtungselementes 107 erhöht, sondern es kann auch eine korrekte Lage des Dichtungselementes 107 beim Zusammensetzen des Tauchrohrformkörpers 103 sichergestellt werden. Daneben wird eine Halterung des Dichtungselementes 107 zwischen dem ersten Formteil 117 und dem zweiten Formteil 119 verbessert.

Zusätzlich kann in dem zweiten Formteil 119 eine Positionierungsfeder vorgesehen sein, die in eine Positionierungsnut in dem Dichtungselement eingreift, anhand der der korrekte Sitz des Dichtungselementes 107 beim Zusammensetzen des Formkörpers sichergestellt wird.

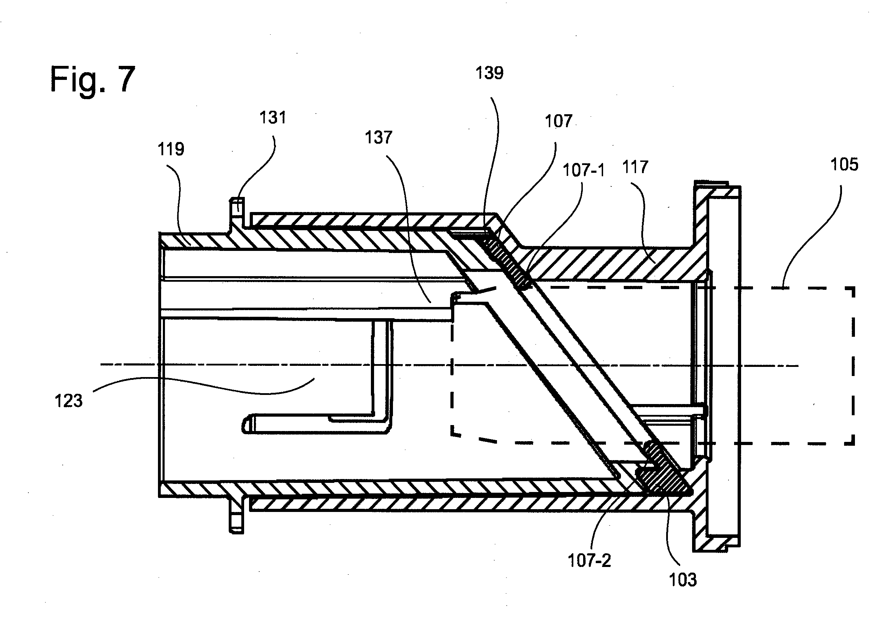

Fig. 7 zeigt eine weitere Querschnittsansicht des Tauchrohrformkörpers 103 mit zusammengesetzten Formkörperteilen 117 und 119, in der eine gestrichelte Linie die Position der eingesetzten Befülldüse 105 angibt. Die Stellen 107-1 und 107-2 sind die Stellen in der Querschnittsebene, an denen die Befülldüse 105 an dem Dichtungselement 107 anliegt. Durch die um die Befülldüse 105 diagonal umlaufende Dichtlinie wird ein Zurückspritzen der Flüssigkeit verhindert.

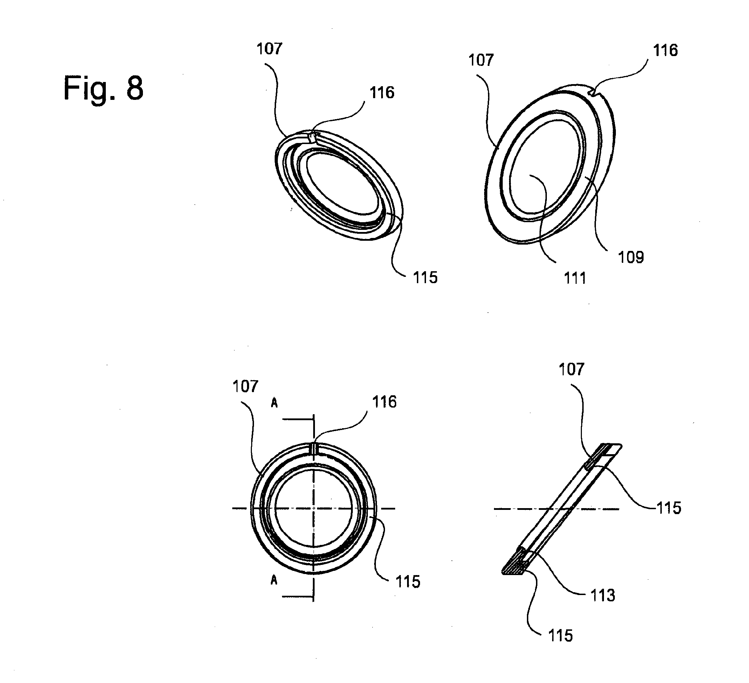

Fig. 8 zeigt mehrere Ansichten eines Dichtungselementes 107. Das Dichtungselement 107 befindet sich in dem Einfüllstutzen 104, der durch den Tauchrohrformkörper 103 und das erste Befüllkopfteil 100-1 gebildet wird. In der Längsrichtung des Einfüllstutzens 104 läuft das Dichtungselement 107 diagonal herum, um den Einfüllstutzen 104 gegenüber der Befülldüse 105 abzudichten. Das Dichtungselement 107 kann ein Material umfassen, das eine Kristallbildung von Harnstoffkristallen an dessen Oberfläche verhindert.

Das Dichtungselement 107 wird durch eine elastische Ringscheibe 109 mit einer ovalen Einführöffnung 111 zum Einführen der Befülldüse 105 gebildet. Die ovale Einführöffnung 111 legt sich bei einer diagonalen Anordnung des Dichtungselementes 107 an die im Querschnitt kreisförmige Außenseite der Befülldüse 105.

Die diagonale Lage des Dichtungselementes 107 stellt sicher, dass die unterschiedlich angeordneten Öffnungen in Zapfpistolen für die Zapfventilautomatik nicht verdeckt werden und eine Abschaltung der jeweiligen Zapfpistole möglich bleibt.

Die Ringscheibe 109 umfasst einen Verstärkungsabschnitt 113 zum Verstärken des Dichtungselementes 107 im Bereich der Einführöffnung 111. Der Verstärkungsabschnitt 113 kann beispielsweise durch einen Bereich mit einer größeren Dicke als die Dicke der übrigen Ringscheibe 109 gebildet sein, beispielsweise durch eine umlaufende ringförmige Wulst 115. Der innere Dichtungsrand des Dichtungselementes 107 wird dadurch nicht nur verstärkt, sondern zusätzlich auch abgerundet, so dass ein Einsetzen der Befülldüse 105 erleichtert wird.

Zum Aufnehmen des Dichtungselementes weist der Tauchrohrformkörper 103 eine Aussparung zum Einsetzen des Dichtungselementes 107 auf. Insbesondere ist die Aussparung zum Einsetzen des Dichtungselementes 107 zwischen einem ersten Formteil 117 und einem zweiten Formteil zwischen zwei Auflageflächen 135 und 139 gebildet. Sowohl das erste Formteil 117 als auch das zweite Formteil 119 können die Aussparung zum Einsetzen des Dichtungselementes 107 umfassen.

Das Dichtungselement 107 weist einen umlaufenden erhöhten oder vorstehenden Randabschnitt 115 auf, der in eine entsprechende ringförmige Aussparung in dem Einfüllstutzen 104 eingesetzt wird und das Dichtungselement 107 in dem Einfüllstutzen 104 zusätzlich fixiert. Daneben umfasst das Dichtungselement 107 eine Positionierungsnut 116 zum Eingreifen in eine entsprechende Positionierungsfeder, anhand der der korrekte Sitz des Dichtungselementes 107 sichergestellt werden kann. Das Dichtungselement 107 kann aus allen geeigneten Dichtmaterialien gebildet sein, beispielsweise aus Polyurethan, Silikon, silanmodifizierten Polymeren oder Gummi.

Durch den erfindungsgemäßen Befüllkopf 100 können unterschiedliche Zapfpistolen sowie GL-Adapter für Kanister und Kruse-Flaschen aufgenommen werden. Eine Schaltung einer Zapfventilautomatik, beispielsweise einer ZVA-Pistole, erfolgt über den Ringmagnet 129 des Befüllkopfes 100. Daneben erfolgt eine Belüftung bei einer Betankung mit einer Kruse-Flasche und einem Kanister über einen Anschlussstutzen 124 für eine Belüftungsleitung.

Weiter ist durch das Flüssigkeitsreservoir 141 der Befüllkopf 100 derart ausgebildet, dass Rückschwappmenge (Spit-Back-Menge) aufgenommen werden kann. Der Befüllkopf 100 ermöglicht einen Druckabbau und vereinheitlicht den Flüssigkeitsstrahl unterschiedlicher Zapfpistolen beim Befülllen. Ein Zurückschwappen von Flüssigkeit (Spit-Back) wird wirksam verhindert. Bei Verwendung des Befüllkopfes 100 zum Befüllen mit einer wässrigen Harnstofflösung kann eine Kristallbildung im Inneren des Befüllkopfes 100 verhindert werden.

Insbesondere ermöglicht der Befüllkopf 100 Füllgeschwindigkeiten von 40l/min mit einem kleinen kompakten Befüllkopf, ohne dass ein Zurückschwappen von Flüssigkeit auftritt. Durch die Anordnung, Lage und Form des Dichtungselementes ist ein dreimaliges Nachtanken ohne Austritt von Flüssigkeit möglich.

Der Tankvorgang mit dem Befüllkopf 100 wird durch ein manuelles Betätigen der Zapfpistole eingeleitet. Über den Befüllkopf 100 gelangt die Flüssigkeit nach dem Öffnen eines Klappenventils in den Flüssigkeitstank und der Flüssigkeitstank wird mit einer wässrigen Harnstofflösung gefüllt. In dem Flüssigkeitstank verdrängt die Flüssigkeit Luft, die über ein Entlüftungsventil einweicht. Anschließend steigt der Flüssigkeitspegel steigt bis an den Tauchrohrformkörper 103 und der Tankinnendruck und der Flüssigkeitsstand steigen. Ein Schwimmerventil schließt und die Flüssigkeit gelangt bis an die Befülldüse der Zapfpistole, deren Zapfventilautomatik daraufhin abschaltet. Ein Klappenventil schließt und der Tankvorgang ist beendet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 100-1: Befüllkopfteil
- 100-2: Befüllkopfteil
- 103: Tauchrohrformkörper
- 104: Einfüllstutzen
- 105: Befülldüse
- 107: Dichtungselement
- 109: Ringscheibe
- 111: Einführöffnung
- 113: Verstärkungsabschnitt
- 115: Wulst
- 116: Positionierungsnut
- 117: erstes Formteil
- 119: zweites Formteil
- 123: Rasthaken
- 127: Rastöffnung
- 131: Schwallwand
- 133: Öffnung
- 135: Auflagefläche
- 137: Anschlagsabschnitt
- 139: Auflagefläche
- 141: Flüssigkeitsreservoir
- 143: Gehäusewand
- 145: Durchtrittsöffnung
- 147: Wandung

## Patentansprüche

1. Befüllkopf (100) für einen Flüssigkeitstank in einem Kraftfahrzeug, mit:
einem Einfüllstutzen (104) zum Einführen einer Befülldüse (105) mit einem Dichtungselement (107) zum Abdichten des Einfüllstutzens (104), das durch eine elastische Ringscheibe (109) mit einer Einführöffnung (111) zum Einführen der Befülldüse (105) gebildet wird, **gekennzeichnet dadurch, dass** das Dichtungselement (107) diagonal um eine Längsachse des Einfüllstutzens (104) umläuft.

2. Befüllkopf (100) nach Anspruch 1, wobei die Einführöffnung (111) eine ovale Form aufweist.

3. Befüllkopf (100) nach einem der vorangehenden Ansprüche, wobei die Ringscheibe (109) einen Verstärkungsabschnitt (113) zum Verstärken des Dichtungselementes (107) um die Einführöffnung (111) herum aufweist.

4. Befüllkopf (100) nach Anspruch 3, wobei der Verstärkungsabschnitt (113) durch einen Ringscheibenbereich mit einer größeren Dicke gebildet wird.

5. Befüllkopf (100) nach Anspruch 3 oder 4, wobei der Verstärkungsabschnitt (113) durch eine ringförmige Wulst (115) gebildet wird.

6. Befüllkopf (100) nach einem der vorangehenden Ansprüche, wobei ein innerer Dichtungsrand des Dichtungselementes (107) abgerundet ist.

7. Befüllkopf (100) nach einem der vorangehenden Ansprüche, wobei das Dichtungselement (107) einen umlaufenden erhöhten Randabschnitt (115) zum Fixieren des Dichtungselementes (107) in einer umlaufenden Aussparung umfasst, die in dem Einfüllstutzen (104) umläuft.

8. Befüllkopf nach einem der vorangehenden Ansprüche, wobei das Dichtungselement (107) einen Positionierungsabschnitt (116) zum Positionieren des Dichtungselementes (107) in dem Einfüllstutzen (104) umfasst.

9. Befüllkopf (100) nach einem der vorangehenden Ansprüche, wobei der Einfüllstutzen (104) eine Aussparung zum Einsetzen des Dichtungselementes (107) umfasst.

10. Befüllkopf (100) nach einem der vorangehenden Ansprüche, wobei der Einfüllstutzen (104) ein erstes Formteil (117) und ein zweites Formteil (119) umfasst, zwischen denen das Dichtungselement (107) eingesetzt ist.

11. Befüllkopf (100) nach Anspruch 10, wobei das erste Formteil (117) ein Rastmittel (123) zum Einrasten in dem zweiten Formteil (119) oder das zweite Formteil (119) ein Rastmittel zum Einrasten in dem ersten Formteil (117) umfasst, um das Dichtungselement (107) zwischen dem ersten Formteil (117) und dem zweiten Formteil (119) einzuklemmen.

12. Befüllkopf (100) nach einem der Ansprüche 10 oder 11, wobei das erste Formteil (117) oder das zweite Formteil (119) eine diagonal umlaufende Auflagefläche (135, 139) für das Dichtungselement (107) umfasst.

13. Befüllkopf (100) nach einem der vorangehenden Ansprüche, wobei der Einfüllstutzen (104) ein Kunststoffformteil ist.

14. Befüllkopf (100) nach einem der vorangehenden Ansprüche, wobei das Dichtungselement aus Silikon oder Gummi gebildet ist.

## Claims

1. Filling head (100) for a liquid tank in a motor vehicle, with a filler neck (104) for the introduction of a filling nozzle (105), with a sealing element (107) for sealing the filler neck (104), the sealing element being formed by an elastic annular disc (109) with an introducing opening (111) for the introduction of the filling nozzle (105), **characterized in that** the sealing element (107) runs diagonally around a longitudinal axis of the filler neck (104).

2. Filling head (100) according to Claim 1, wherein the introducing opening (111) has an oval shape.

3. Filling head (100) according to either of the preceding claims, wherein the annular disc (109) has a reinforcing section (113) for reinforcing the sealing element (107) around the introducing opening (111).

4. Filling head (100) according to Claim 3, wherein the reinforcing section (113) is formed by an annular disc region of greater thickness.

5. Filling head (100) according to Claim 3 or 4, wherein the reinforcing section (113) is formed by an annular bead (115).

6. Filling head (100) according to one of the preceding claims, wherein an inner sealing edge of the sealing element (107) is rounded.

7. Filling head (100) according to one of the preceding claims, wherein the sealing element (107) comprises an encircling, raised edge section (115) for fixing the sealing element (107) in an encircling cutout which runs around the inside of the filler neck (104).

8. Filling head according to one of the preceding claims, wherein the sealing element (107) comprises a positioning section (116) for positioning the sealing element (107) in the filler neck (104).

9. Filling head (100) according to one of the preceding claims, wherein the filler neck (104) comprises a recess for the insertion of the sealing element (107).

10. Filling head (100) according to one of the preceding claims, wherein the filler neck (104) comprises a first moulded part (117) and a second moulded part (119), between which the sealing element (107) is inserted.

11. Filling head (100) according to Claim 10, wherein the first moulded part (117) comprises a latching means (123) for latching in the second moulded part (119) or the second moulded part (119) comprises a latching means for latching in the first moulded part (117), in order to clamp the sealing element (107) between the first moulded part (117) and the second moulded part (119).

12. Filling head (100) according to either of Claims 10 or 11, wherein the first moulded part (117) or the second moulded part (119) comprises a diagonally encircling supporting surface (135, 139) for the sealing element (107).

13. Filling head (100) according to one of the preceding claims, wherein the filler neck (104) is a moulded plastics part.

14. Filling head (100) according to one of the preceding claims, wherein the sealing element is formed from silicone or rubber.

## Revendications

1. Tête de remplissage (100) pour un réservoir de liquide dans un véhicule automobile, comprenant une tubulure de remplissage (104) pour l'insertion d'une buse de remplissage (105), comprenant un élément d'étanchéité (107) pour rendre étanche la tubulure de remplissage (104), lequel est formé par un disque annulaire élastique (109) présentant une ouverture d'insertion (111) pour l'insertion de la buse de remplissage (105), **caractérisée en ce que** l'élément d'étanchéité (107) s'étend en diagonale autour d'un axe longitudinal de la tubulure de remplissage (104).

2. Tête de remplissage (100) selon la revendication 1, dans laquelle l'ouverture d'insertion (111) présente une forme ovale.

3. Tête de remplissage (100) selon l'une quelconque des revendications précédentes, dans laquelle le disque annulaire (109) comprend une portion de renforcement (113) pour le renforcement de l'élément d'étanchéité (107) autour de l'ouverture d'insertion (111).

4. Tête de remplissage (100) selon la revendication 3, dans laquelle la portion de renforcement (113) est formée par une région de disque annulaire présentant une plus grande épaisseur.

5. Tête de remplissage (100) selon la revendication 3 ou 4, dans laquelle la portion de renforcement (113) est formée par un bourrelet annulaire (115).

6. Tête de remplissage (100) selon l'une quelconque des revendications précédentes, dans laquelle un bord d'étanchéité interne de l'élément d'étanchéité (107) est arrondi.

7. Tête de remplissage (100) selon l'une quelconque des revendications précédentes, dans laquelle l'élément d'étanchéité (107) comporte une portion de bord périphérique élevée (115) pour la fixation de l'élément d'étanchéité (107) dans un évidement périphérique, qui s'étend dans la tubulure de remplissage (104).

8. Tête de remplissage selon l'une quelconque des revendications précédentes, dans laquelle l'élément d'étanchéité (107) comporte une portion de positionnement (116) pour le positionnement de l'élément d'étanchéité (107) dans la tubulure de remplissage (104).

9. Tête de remplissage (100) selon l'une quelconque des revendications précédentes, dans laquelle la tubulure de remplissage (104) comporte un évidement pour l'insertion de l'élément d'étanchéité (107).

10. Tête de remplissage (100) selon l'une quelconque des revendications précédentes, dans laquelle la tubulure de remplissage (104) comporte une première pièce moulée (117) et une deuxième pièce moulée (119), entre lesquelles est inséré l'élément d'étanchéité (107).

11. Tête de remplissage (100) selon la revendication 10, dans laquelle la première pièce moulée (117) comporte un moyen d'encliquetage (123) pour l'encliquetage dans la deuxième pièce moulée (119), ou la deuxième pièce moulée (119) comporte un moyen d'encliquetage pour l'encliquetage dans la première pièce moulée (117), afin de serrer l'élément d'étanchéité (107) entre la première pièce moulée (117) et la deuxième pièce moulée (119) .

12. Tête de remplissage (100) selon l'une quelconque des revendications 10 ou 11, dans laquelle la première pièce moulée (117) ou la deuxième pièce moulée (119) comporte une surface d'appui (135, 139) s'étendant en diagonale pour l'élément d'étanchéité (107).

13. Tête de remplissage (100) selon l'une quelconque des revendications précédentes, dans laquelle la tubulure de remplissage (104) est une pièce moulée en plastique.

14. Tête de remplissage (100) selon l'une quelconque des revendications précédentes, dans laquelle l'élément d'étanchéité est formé à partir de silicone ou de caoutchouc.
